# EUROPÄISCHE PATENTANMELDUNG

(11) **EP 0 703 400 A2**
(43) Veröffentlichungstag der Anmeldung: **27.03.1996**
(21) Anmeldenummer: 95112855.2
(22) Anmeldetag: 16.08.1995
(51) Int. Cl.: F16M 11/04

(54) **Gelenkarm zur höhenverstellbaren Aufnahme mit Anschlag**

(30) Priorität: 18.08.1994 DE 4428890; 29.09.1994 DE 9415734 U; 30.03.1995 DE 29505404 U
(71) Anmelder: Krüger, Günther, D-24232 Schönkirchen (DE)
(72) Erfinder: Krüger, Günther, D-24232 Schönkirchen (DE)
(74) Vertreter: Tönnies, Jan G., Dipl.-Ing.

(57) **Zusammenfassung**

Gelenkarm zur höhenverstellbaren Aufnahme mit Anschlägen, insbesondere zur Aufnahme von Computerbildschirmen mit einem über eine Klemme oder dergleichen zu befestigenden Halteelement (10), einem eine Tragplatte tragenden Tragelement (12), einem sich zwischen den beiden Elementen erstreckenden Parallelgestänge (14,16) und einem sich zwischen den beiden Elementen erstreckenden Federmittel (20), wobei das Parallelgestänge mit einem Paar von in ersten Gelenkpunkten (24,26) im oberen (oder unteren) Bereich der Elemente (10,12) außen an diese angesetzte Wangen und wenigstens einer innen benachbart zu den Wangen von diesen verdeckt verlaufenden in zweiten Gelenkpunkten (28,30) im unteren, bzw. im oberen Bereich der Elemente (10,12) an diese angesetzte Strebe (14) besteht, wobei einerseits der Abstand der ersten Gelenkpunkte (24,26) von einander dem Abstand der zweiten Gelenkpunkte (28,30) voneinander und andererseits der Abstand zwischen den ersten und den zweiten Gelenkpunkten (24,28;26,30) voneinander an den beiden Elementen (10,12) einander entsprechend, wobei das Federmittel (20) an einem dritten Gelenkpunkt (22) unter- (bzw. ober-)halb der weiteren beiden Gelenkpunkte (24,28) in dem Halteelement (10) vorgesehen ist, und an seinem anderen Ende in der als Hohlkörper ausgebildeten Wange (16) weiter vom distalen Ende als der Gelekpunkt (26) einem Gelenkpunkt (32) angelenkt ist.

## Beschreibung

Die Erfindung betrifft ein Gelenkarm nach dem Oberbegriff des Anspruches 1.

Derartige, insbesondere in Büros eingesetzte Gelenkarme, müssen verschiedene Anforderungen erfüllen: Obwohl sie sehr hohe Gewichte an sehr langen Hebeln unterstützen müssen, müssen sie vielen Zyklen der Bewegung standhalten können. Aufgrund der sehr hohen Kräfte, die mit entsprechend hohen Gasdruckfedern aufgefangen werden, werden die Gelenkpunkte starken einseitigen Belastungen ausgesetzt.

Als in großen Stückzahlen gefertigtes Bauteil soll an die Gelenkarme doch kostengünstig hergestellt werden.

Schließlich müssen die im Bürobereich gestellten ästhetischen Anforderungen und Sicherheitsanforderungen erfüllt werden, so daß keine einklemmenden Teile offenliegen.

Der Erfindung liegt damit die Aufgabe zugrunde, vorbekannte Gelenkarme in Ihrer Verwindungssteifigkeit wesentlich zu steigern und die für ihre Bedienung erforderlichen Kräfte zu minimieren.

Erfindungsgemäß wird diese Aufgabe dadurch gelöst, daß die Elemente des Gelenkarmes entsprechend den Merkmalen des Anspruches 1 angeordnet werden.

Eine bevorzugte Ausgestaltung der Erfindung zeichnet sich durch ein Verschwenkelement aus, das mit einem zusätzlichen breiten Aufsatz versehen ist, der mit der Innenwandung des außen umgebenden Rohres an jeweiligen Endpositionen in Verbindung tritt, so daß aufgrund des hohen Drucks der Gasdruckfederbewegung bereits in diesen Positionen gestoppt wird und nicht dann, wenn beispielsweise Ränder des Elementes 16 mit den Halte- oder Tragelementen zusammenstoßen, und ungünstige Belastungen hervorrufen.

Durch die Vorsehung einer rechteckförmigen Außenverkleidung 16, die rohrförmig das Parallelgestänge umgibt, ist eine kostengünstige, ästhetisch schöne und vor allem sichere steife Ausbildung des Parallelgestänges ermöglicht.

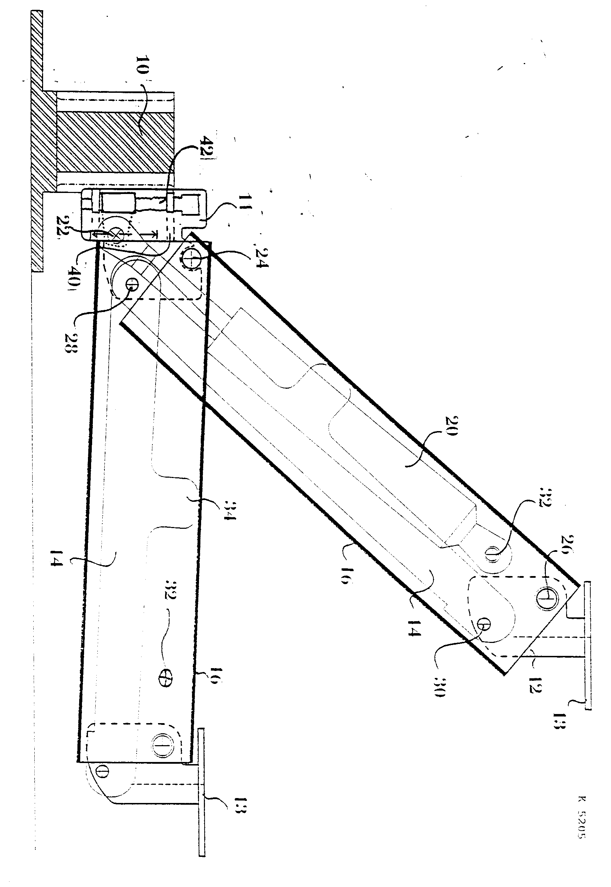

Die Erfindung wird im folgenden anhand einer Zeichnung erläutert. Dabei zeigt die einzige Figur den erfindungsgemäßen Gelenkarm in zwei Positionen, einer in der zusätzlich das Federmittel, eine Gasdruckfeder eingezeichnet ist und die den Gelenkarm in einer oberen angehobenen Gelenkposition zeigt, und eine weitere, die den Federarm in einer abgesenkten Position zeigt, wobei die Gasdruckfeder in dieser Position nicht dargestellt ist.

In der Figur bleiben die drei Anlenkpunkte an dem Halteteil 10 in beiden Stellungen unbewegt, während deutlich zu erkennen ist, wie der Anlenkpunkt 30 im unteren Bereich des Tragelementes sich in Bezug zu dem Anlenkpunkt 26 im oberen Bereich des Tragelementes, wo dieses mit dem Außenrohr 16 in Verbindung steht, bewegt wird.

Das Halteelement 10, das als rohrförmiger Körper gebildet ist, an das ein Abschnitt 11 zur Lagerung der Gelenkpunkte angeschweißt ist, wird mit einer Klemme oder dergleichen an einer Tischplatte verbunden. Vorteilhafterweise sind zwei in einem Abstand von ca. 2,5 bis 3 cm voneinander beabstandeten Abschnitte 11 (z.B. Wangen) an das säulenförmige Grundelement des Halteteils 10 angesetzt. Sie werden durch ein hülsenförmiges, in der Fig. nur im Schnitt dargestelltes Stiftelement sowie durch zwei Abstandhalter 40, die in entsprechende Ausnehmungen in den Wangen 11 eingreifen, auf Distanz gehalten. Die in den Wangen 11 eingreifenden Abstandhalter 40 sowie das Hülsenelement um den Anlenkpunkt 24 herum werden mit diesem in der nach dem Zusammenstecken fest definiert vorgegebenen Position verschweißt und auch durch Sintern gehärtet, um insbesondere Abnutzungen in der Achse 24 zu verhindern.

In den beiden Abstandhaltern 40 sind runde Ausnehmungen zur Befestigung einer Vertikalspindel 42 vorgesehen, durch deren Drehung der an dieser Spindel 42 befestigte Anlenkpunkt 22 auf und ab eingestellt werden kann, um die Gasdruckfeder 20 mit einer anderen Vorspannung für eine andere Tragkraft zu versehen.

Die Wangen 11 weisen an ihrem unteren Ende einen Absatz auf, der dem anstoßenden Außenrohr 16 als unterer Anschlag dient.

In gleicher Weise wird das Tragelement 12 aus einer Tragplatte 13 und zweiflächigen Abschnitten gebildet, die mit Hilfe eines hülsenförmigen Teils am Ort des Gelenkpunktes 26 eines Distanzhalters zwischen diesem hülsenförmigen Teil und einer Stifthülse für eine Verdrehbarkeit einer auf der Tragplatte 13 angeordneten weiteren Platte verbunden. Nach Verschweißen des zusammengesteckten Tragstückes wird es oberflächengehärtet, um insbesondere der Hülse am Ort des Gelenkpunktes 26 eine besondere Oberflächenhärte zu geben, die verhindert, daß sich Abnutzungen ergeben, die das einwandfreie Bewegen des Gelenkarmes behindern und zu ungleichförmiger Bewegung, im schlimmsten Fall zu der Nichteinstellbarkeit bestimmter Positionen führen würde.

Die Ansatzwangen 11 des Halteelementes und des Tragelementes 12 sind seitlich neben, bzw. oberhalb der Anlenkpunkte 24 und 26 mit Aussparungen versehen, die ein Einschwenken der Kante des rohrförmigen Elementes 16 in der aufgestellten bzw. herabgeneigten Position jeweils ermöglichen.

Der Gelenkarm besteht also zur höhenverstellbaren Aufnahme bei Gewährleistung von Endanschlägen, aus einem über eine Klemme oder dergleichen zu befestigenden Halteelement 10, einem eine Tragplatte tragenden Tragelement 12, einem sich zwischen den beiden Elementen 10, 12 erstreckenden Parallelgestänge 14, 16 und einem sich zwischen den beiden Elementen erstreckenden Federmittel 20, wobei das Parallelgestänge mit einem Paar von in ersten Gelenkpunkten 24, 26 im oberen (oder unteren) Bereich der Elemente 10, 12 außen an diese angesetzte Wangen und wenigstens einer innen benachbart zu den Wangen von diesen verdeckt verlaufenden in zweiten Gelenkpunkten 28, 30 im unteren, bzw. im oberen Bereich der Elemente 10, 12 an diese angesetzte Strebe 14 besteht, wobei einerseits der Abstand der ersten Gelenkpunkte 24, 26 von einander dem Abstand der zweiten Gelenkpunkte 28, 30 voneinander und andererseits der Abstand zwischen den ersten und den zweiten Gelenkpunkten 24, 28; 26, 30 voneinander an den beiden Elementen 10, 12 einander entsprechend, und weist erstmals das Federmittel an dem dritten Gelenkpunkt 22 unter (bzw. ober-) halb der weiteren beiden Gelenkpunkte 24, 28 in dem Halteelement 10 vorgesehen ist, und an seinem anderen Ende in der als Hohlkörper ausgebildeten Wange 16 weiter vom distalen Ende als der Gelenkpunkt 26 einem Gelenkpunkt 32 angelenkt ist.

Vorteilhafterweise ist der Gelenkpunkt 32 relativ zum Gelenkpunkt 30 am Parallelgestängeelement 14 ober- (bzw. unter-) halb dieses, auf der gleichen Seite wie der Gelenkpunkt 26 angeordnet, um nicht mit der Stange der Gasdruckfeder anzustoßen, was deren Dichtung auf Dauer beschädigte.

Der Gelenkpunkt 24 ist am Halteelement 10 durch eine eingeschweißte Hülse aus hartem Stahl gebildet, ebenso wie der Gelenkpunkt 26 im Tragelement 12 durch eine eingeschweißte Hülse aus hartem Stahl gebildet ist. Dadurch ist gegenüber vorbekannten Gelenkarmen eine wesentliche Verbesserung durch geringere Abnutzung gegeben, die bisher die präzise Einstellung und die leichte Verschenkbarkeit beeinträchtigte.

Das Tragelement 12 und wenigstens die Wangen 11 des Halteelements 10 sind oberflächengehärtet und das Parallelgestängeelement 14 weist eine Nase 34 auf, die mit dem oberen Bereich des umgebenden Rohres 16 in der oberen Anschlagposition innen in Verbindung tritt, um einen stabilen, nicht wesentlich abnutzenden Anschlag zu bilden.

## Patentansprüche

1. Gelenkarm zur höhenverstellbaren Aufnahme mit Anschlägen, insbesondere zur Aufnahme von Computerbildschirmen mit,
- einem über eine Klemme oder dergleichen zu befestigenden Halteelement (10),
- einem eine Tragplatte tragenden Tragelement (12),
- einem sich zwischen den beiden Elementen (10, 12) erstreckenden Parallelgestänge (14, 16) und einem sich zwischen den beiden Elementen erstreckenden Federmittel (20),
wobei das Parallelgestänge mit einem Paar von in ersten Gelenkpunkten (24, 26) im oberen (oder unteren) Bereich der Elemente (10, 12) außen an diese angesetzte Wangen und wenigstens einer innen benachbart zu den Wangen von diesen verdeckt verlaufenden in zweiten Gelenkpunkten (28, 30) im unteren, bzw. im oberen Bereich der Elemente (10, 12) an diese angesetzte Strebe (14) besteht, wobei einerseits der Abstand der ersten Gelenkpunkte (24, 26) von einander dem Abstand der zweiten Gelenkpunkte (28, 30) voneinander und andererseits der Abstand zwischen den ersten und den zweiten Gelenkpunkten (24, 28; 26, 30) voneinander an den beiden Elementen (10, 12) einander entsprechend,
dadurch gekennzeichnet, daß
das Federmittel an einem dritten Gelenkpunkt (22) unter- (bzw. ober-) halb der weiteren beiden Gelenkpunkte (24, 28) in dem Halteelement (10) vorgesehen ist, und an seinem anderen Ende in der als Hohlkörper ausgebildeten Wange (16) weiter vom distalen Ende als der Gelenkpunkt (26) einem Gelenkpunkt (32) angelenkt ist.

2. Gelenkarm nach Anspruch 1, gekennzeichnet durch eine Spindel (42), gehaltert an und zwischen den Wangen (11) am Halteelement (10), zur Vertikalverstellung des Gelenkpunkts (22) relativ zum Halteelement (10) zur Einstellung der Federkraft der Gasdruckfeder (20).

3. Gelenkarm nach einem der vorangehenden Ansprüche, dadurch gekennzeichnet, daß der Gelenkpunkt (24) am Halteelement (10) durch eine eingeschweißte Hülse aus hartem Stahl gebildet ist.

4. Gelenkarm nach einem der vorangehenden Ansprüche, dadurch gekennzeichnet, daß der Gelenkpunkt (26) im Tragelement (12) durch eine eingeschweißte Hülse aus hartem Stahl gebildet ist.

5. Gelenkarm nach einem der vorangehenden Ansprüche, dadurch gekennzeichnet, daß das Tragelement (12) und wenigstens die Wangen (11) des Halteelementes (10) oberflächengehärtet sind.

6. Gelenkarm nach einem der vorangehenden Ansprüche, dadurch gekennzeichnet, daß das Parallelgestängeele ment (14) eine Nase (34) aufweist, die mit dem oberen Bereich des umgebenden Rohres (16) in einer Anschlagposition innen in Verbindung tritt.
